(19) **Europäisches Patentamt / European Patent Office / Office européen des brevets**

(11) **EP 4 765 018 A1**

(12) **EUROPEAN PATENT APPLICATION**

(43) Date of publication:
**24.06.2026  Bulletin 2026/26**

(21) Application number: **24221393.2**

(22) Date of filing: **19.12.2024**

(51) International Patent Classification (IPC):
***G06T 7/11*** *(2017.01)*

(52) Cooperative Patent Classification (CPC):
**G06T 7/11;** G06T 2207/20084

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Koninklijke Philips N.V.**
**5656 AE Eindhoven (NL)**

(72) Inventors:
• **VAREKAMP, Christiaan**
**5656 AG Eindhoven (NL)**
• **FOLKERS, Koenraad Nikolaas**
**5656 AG Eindhoven (NL)**

(74) Representative: **Philips Intellectual Property & Standards**
**High Tech Campus 34**
**5656 AE Eindhoven (NL)**

(54) **METHOD AND SYSTEM FOR OBJECT INSTANCE SEGMENTATION**

(57)    A method and system for object instance segmentation. Imaging and/or audio data is obtained, and a plurality of prompts for an object instance in the imaging and/or audio data is defined. Each prompt is provided to a prompt-based segmentation model to generate a respective initial segmentation mask for each prompt. At least some of the initial segmentation masks are processed to generate a final segmentation mask for the object instance.

300

Obtain audio/imaging data — 310

Identify region of interest — 320

Define prompts — 330

Generate initial masks — 340

Define object prior — 350

Compare initial masks with object prior — 360

Define subset of initial masks — 370

Determine final mask — 380

FIG. 3

**Description**

FIELD OF THE INVENTION

The invention relates to the field of object instance segmentation.

BACKGROUND OF THE INVENTION

Object instance segmentation is a computer vision technique that identifies and defines the boundaries of each instance of an object in an image. Conventional object instance segmentation algorithms have a number of disadvantages. For example, these algorithms are only able to detect a limited number of object classes, and acquiring sufficient training data to train an object instance segmentation algorithm to detect a large number of object classes is costly. Adjusting a conventional object instance algorithm requires training the algorithm on new samples. Further, object instance segmentation algorithms often provide outputs at low resolutions.

Many newer object instance segmentation algorithms build upon a prompt-based segmentation model, Segment Anything Model (SAM), first described in Kirillov et al. (2023), "Segment Anything", arXiv:2304.02643. For instance, Language Segment-Anything uses grounding DINO to output a bounding box for an object based on a manual text prompt, and uses the output bounding box as an input to SAM.

Object instance segmentation algorithms based on prompt-based segmentation algorithms are able to identify a greater variety of object classes. However, these algorithms do not perform well on all types of object, particularly composite objects (where a prompt positioned on a component of the composite object may result in a segmentation of the component or of the composite object), and objects with transparent parts (where a prompt positioned on a transparent part of an object may result in a segmentation of an object visible through the transparent part).

SUMMARY OF THE INVENTION

The invention is defined by the claims.

According to examples in accordance with an aspect of the invention, there is provided a method for object instance segmentation, the method comprising: obtaining imaging and/or audio data; defining, for an object instance in the imaging and/or audio data, a plurality of prompts for a prompt-based segmentation model; for each of the plurality of prompts, processing the imaging and/or audio data using a prompt-based segmentation model to generate an initial segmentation mask; and processing at least a subset of the initial segmentation masks to determine a final segmentation mask for the object instance.

The inventors have recognized that determining a final segmentation mask for the object instance based on a number of segmentation results, each generated using a different prompt, enables an accurate segmentation mask to be generated for the object more reliably than if a single prompt is used. In this way, an accurate segmentation mask may be provided without user input to confirm that the object boundary is correct.

In particular, the inventors have recognized that the use of several prompts means that a large proportion of the prompts will result in segmentation masks for an object instance that are similar to one another, while the most inaccurate segmentation masks for an object instance will tend to be outliers. The final segmentation mask may be determined in a way that ignores or gives less weight to these outliers. By contrast, if a single prompt is used, it is possible that the resulting segmentation mask will be an outlier. Thus, the use of several prompts more reliably provides an accurate segmentation mask for the object instance.

In some examples, the imaging and/or audio data comprises imaging data.

The imaging data may comprise an image acquired by an optical camera, or medical imaging data (e.g. ultrasound imaging data, CT imaging data, MRI imaging data, etc.)

In some examples, the method further comprises: defining an object prior for the object instance; and for each initial segmentation mask, comparing the initial segmentation mask with the object prior; and the step of processing at least a subset of initial segmentation masks to determine the final segmentation mask for the object instance is based on the comparison of each initial segmentation mask with the object prior.

This reduces an impact of very inaccurate segmentation masks on the final segmentation mask, thus further improving an accuracy of the final segmentation mask.

In some examples, the method further comprises defining a subset of initial segmentation masks based on the comparison of each initial segmentation mask with the object prior; and only the defined subset of initial segmentation masks is processed to determine the final segmentation mask for the object instance.

In this way, only initial segmentation masks that correspond to the object instance may be used to determine the final segmentation mask.

In some examples, the imaging and/or audio data comprises imaging data, and the step of comparing each initial segmentation mask with the object prior comprises comparing a size of each initial segmentation mask with a size of the object prior; and the step of defining the subset of initial segmentation masks comprises excluding from the subset any initial segmentation mask for which a size of the initial segmentation mask falls outside a predetermined margin of the size of the object prior.

In some examples, the imaging and/or audio data comprises imaging data, and the step of comparing each initial segmentation mask with the object prior comprises determining, for each initial segmentation mask, a measure of shape similarity of a shape of the initial segmentation mask to a shape of the object prior; and the step of defining the subset of initial segmentation masks comprises excluding from the subset any initial segmentation mask for which the measure of shape similarity fails to exceed a predetermined similarity threshold.

In some examples, the step of processing at least a subset of initial segmentation masks to determine the final segmentation mask for the object instance comprises weighting each initial segmentation mask according to similarity.

In this way, less accurate segmentation masks (which will have less similarity to the object prior) are given less weighting when determining the final segmentation mask.

In some examples, the plurality of prompts for the object instance is defined by: identifying a region of interest for an object instance in the imaging and/or audio data; and defining the plurality of prompts within the region of interest.

This improves a likelihood that the prompts are within the boundary of the object instance, thus improving a likelihood that each initial segmentation mask segments the object instance (rather than another object instance in the imaging and/or audio data).

In some examples, the imaging and/or audio data comprises imaging data; and the region of interest for the object instance is identified using an object detection algorithm.

In some examples, the plurality of prompts is defined by statistical sampling of the region of interest.

In some examples, the plurality of prompts is defined by generating a plurality of textual descriptions of the object instance. The plurality of textual descriptions may be generated using an object detection algorithm to generate a label for the object instance, and processing the label to generate a plurality of textual variations for the label.

In some examples, the final segmentation mask is determined by: processing at least a subset of the initial segmentation masks to define a frequency distribution for a plurality of elements of the imaging and/or audio data; and processing the frequency distribution to determine a final segmentation mask for the object instance.

In this way, the more initial segmentation masks an element is included in, the more likely the element is to be included in the final segmentation mask. Thus, an element that included in an inaccurate initial segmentation mask but no other initial segmentation mask (or few other initial segmentation masks) may be excluded from the final segmentation mask. An element of the imaging data may be a pixel in the case of imaging data or a sample in the case of audio data.

In some examples, the frequency distribution is defined by summing at least a subset of the initial segmentation masks.

In other words, for each element of the imaging and/or audio data, the value in the frequency distribution corresponds to the number of initial segmentation masks (or the number of initial segmentation masks in the subset) in which the element is found.

In some examples, the frequency distribution may be a normalized sum of at least a subset of the initial segmentation masks. In this way, the value of the frequency distribution for each element corresponds to a probability that the element belongs to the object instance.

In some examples, the frequency distribution may be a weighted sum of at least a subset of the initial segmentation masks (for instance, where each initial segmentation mask is compared with an object prior for the object instance, the frequency distribution may be weighted according to the comparison with the object prior).

In some examples, the step of processing the frequency distribution to determine a final segmentation mask for the object instance comprises: applying a threshold to the frequency distribution; and classifying any element of the imaging and/or audio data exceeding the threshold as belonging to the object instance.

The value of the threshold may depend on the application for which the object instance segmentation is being performed.

In some examples, an enlarging operation may be performed on the frequency distribution, and the values for the frequency distribution between adjacent elements of the imaging and/or audio data may be interpolated. This may further improve an accuracy of the final segmentation mask.

There is also provided a computer program product comprising computer program code means which, when executed on a computing device having a processing system, cause the processing system to perform all of the steps of any method described above.

According to examples in accordance with an aspect of the invention, there is provided a processing system for object instance segmentation, the processing system being configured to: obtain imaging and/or audio data; define, for an object instance in the imaging and/or audio data, a plurality of prompts for a prompt-based segmentation model; for each of the plurality of prompts, process the imaging and/or audio data using a prompt-based segmentation model to generate an initial segmentation mask; and process at least a subset of the initial segmentation masks to determine a final segmentation mask for the object instance.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 illustrates a system for object instance segmentation, according to an embodiment of the invention;
Fig. 2 illustrates an example of object instance segmentation; and
Fig. 3 illustrates a method for object instance segmentation, according to an embodiment of the invention.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method and system for object instance segmentation. Imaging and/or audio data is obtained, and a plurality of prompts for an object instance in the imaging and/or audio data is defined. Each prompt is provided to a prompt-based segmentation model to generate a respective initial segmentation mask for each prompt. At least some of the initial segmentation masks are processed to generate a final segmentation mask for the object instance.

Embodiments are at least partly based on the realization that a prompt-based segmentation model outputs different segmentation masks for different prompts. In many cases, if the prompts indicate the same object instance, the output segmentation masks will differ only slightly from one another; however, in some cases, a prompt intended to indicate a particular object instance will result in an inaccurate segmentation mask. The use of several initial segmentation masks, each generated using a different prompt, enables the generation of a final segmentation mask that reliably defines the boundary of the object instance.

Illustrative embodiments may, for example, be employed in image segmentation applications, medical imaging applications and audio segmentation applications.

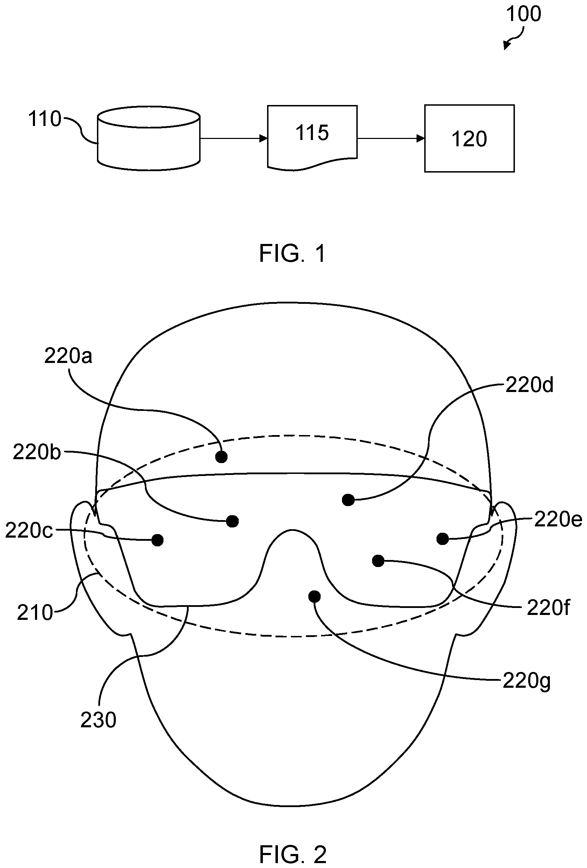

Fig. 1 illustrates a system 100 for object instance segmentation, according to an embodiment of the invention. The system 100 comprises a memory unit 110 and a processing system 120. The processing system 120 is, itself, an embodiment of the invention.

The processing system 120 is configured to obtain imaging and/or audio data 115. The imaging and/or audio data may, for example, comprise an (optical) image (i.e. an image acquired by an optical camera), medical imaging data (such as ultrasound imaging data, CT imaging data, MRI imaging data, electrocardiography data, etc.), audio data, a video, or a video with accompanying audio data. In Fig. 1, the imaging and/or audio data is obtained from the memory unit 110; however, the skilled person will readily appreciate that the imaging and/or audio data may be obtained from another source (such as a device that acquired the imaging and/or audio data).

Having obtained the imaging and/or audio data, the processing system 120 is configured to define, for an object instance in the imaging and/or audio data, a plurality of prompts for a prompt-based segmentation model. An object instance is a particular occurrence of an object (rather than the class of object) captured in the imaging and/or audio data. The term "object instance" is well known in the field of image segmentation. In the case of audio data, what is considered to be an object instance may depend on the context. For example, different instances of a sound produced by a single source may be considered separate object instances; in other words, the audio data may be segmented with respect to time (e.g. the prompt-based segmentation model may be configured to output a scalar field which provides an object instance ID for each time sample). For example, in audio data of a heart beating, each heartbeat may be considered a separate object instance. If the audio data comprises audio data from several sources (e.g. speech by different voices), audio data from each source may be considered a separate object instance (e.g. the prompt-based segmentation model may be configured to output an object instance ID as a function of both time and frequency).

The prompts may be defined in any format that is capable of being processed by a prompt-based segmentation model to generate a segmentation mask. For instance, each prompt may be a text prompt, an indication of a region of the imaging/audio data (where a "region" in audio data is a continuous section of the audio data), and/or a point in the imaging/audio data (e.g. a pixel in the case of imaging data, or a sample in the case of audio data). An indication of a region of imaging data may, for example, be a bounding box or another outline defining the region. The number of prompts defined for the object instance may depend on a complexity of the object instance, on the certainty with which the position, size and/or shape is known, and/or on the application for which the object instance is being segmented (e.g. on a desired accuracy of the segmentation). For instance, in some applications, two prompts may be considered enough to provide a suitably accurate segmentation mask. In other applications, a much larger number of prompts may be used. The number of prompts used may depend on whether the object instance segmentation is being performed in real-time. For example, for real-time object instance segmentation, 2-10 prompts may be used, while for object instance segmentation that is not required to be performed in real-time or near real-time, a larger number of prompts may be used (for instance, at least 50 prompts, e.g. at least 100 prompts).

In some examples, the prompts may be regions and/or points defined (e.g. defined arbitrarily or at regular intervals) throughout the imaging and/or audio data 115.

In other examples, the plurality of prompts may be defined by first identifying a region of interest for the object instance (in the case of audio data, the "region of interest" is a section of the audio data); the prompts may then be defined within the region of interest. For instance, the plurality of prompts may be defined by statistical sampling of the region of interest (e.g. the plurality of prompts may be defined at stochastic locations). In this way, the prompts are more likely to correspond to the object instance.

Where the imaging and/or audio data 115 comprises imaging data, the region of interest for the object instance may be identified using an object detection algorithm, which provides an indication of the presence and position of the object instance within the imaging data. Any suitable object detection algorithm may be used; for instance, if no information about the content of the image is known, a general object detection algorithm may be used. If a type of object expected to be present in the imaging data is known, a specialized object detection algorithm may be used. For example, if the imaging data has been acquired for an application in which it may be expected that the imaging data captures a face of a person, a facial feature detector may be used to identify the region of interest. If the imaging data is medical imaging data, it may be expected that the imaging data captures anatomical features; an anatomical feature detector may therefore be used to identify the region of interest. In some examples, a priori knowledge may be used to identify the region of interest; for instance, if the object instance is a face in video data for a video call, the center of a frame of the video data may be identified as the region of interest. Where the imaging and/or audio data 115 comprises audio data, the identification of the region of interest may depend on the object instance being segmented. For instance, if the audio data comprises speech and the object instance is a particular section of speech, a region of interest may be identified using a speech recognition algorithm to determine the boundaries of periods of speech in the audio data.

In some examples, the plurality of prompts may additionally or alternatively comprise text prompts. In the case of imaging data, suitable text prompts may be defined by using an object detection algorithm to generate a description for the object instance (e.g. an identification of the object class), and generating textual variations for the label. The textual variations may include synonyms and/or near-synonyms for the label and/or textual variations in which the label is qualified by one or more adjectives (e.g. with different variations describing different options for the color, size and/or material of the object instance). The label and the textual variations may be used as prompts for the prompt-based segmentation algorithm.

For each of the plurality of prompts, the processing system 120 is configured to process the imaging and/or audio data using a prompt-based segmentation model to generate an initial segmentation mask. In other words, the processing system is configured to generate a plurality of initial segmentation masks, each initial segmentation mask being generated by providing a respective one of the plurality of prompts to the prompt-based segmentation model.

The prompt-based segmentation model may be any prompt-based segmentation model able to support the format of the prompts in the plurality of prompts and capable of processing the imaging and/or audio data 115. For example, in the case of imaging data, the prompt-based segmentation model may be Segment Anything Model (SAM) (see Kirillov et al. (2023), "Segment Anything", arXiv:2304.02643), or a prompt-based segmentation model developed based on Segment Anything Model. If the imaging data is medical imaging data, the prompt-based segmentation model may be MedSAM, a modification of Segment Anything Model trained using medical imaging data (see Ma et al. (2024), "Segment anything in medical images", Nat. Commun. 15:654).

At least a subset of the initial segmentation masks is processed to determine a final segmentation mask for the object instance. In some examples, all initial segmentation masks may be processed to determine the final segmentation mask. In other examples, only a subset of the initial segmentation masks may be processed to determine the final segmentation mask; this may further improve the accuracy of the final segmentation mask by reducing the effect of inaccurate initial segmentation masks on the final segmentation mask.

Various techniques are envisaged for identifying a subset of the initial segmentation masks to be used to determine the final segmentation mask.

For example, the subset of the initial segmentation masks may be identified based on a measure of the similarity of each initial segmentation mask with each other initial segmentation mask, such that any initial segmentation mask that is similar to the majority of initial segmentation masks is included in the subset, while any initial segmentation mask that has a low level of similarity to the other initial segmentation masks (i.e. any outlier mask) is excluded from the subset. The measure of similarity of each initial segmentation mask with each other initial segmentation mask may be determined by processing each initial segmentation mask to define a shape description for the initial segmentation mask (e.g. an image moment), and comparing each shape description with each other shape description.

In examples in which the prompts were defined within a region of interest for the object instance, it may be expected that any initial segmentation mask that is similar to the majority of initial segmentation masks defines the boundaries of the object instance with reasonable accuracy (as the initial segmentation masks for any prompts falling within the region of interest but outside the boundaries of the object instance and any prompts resulting in an initial segmentation mask that defines the boundaries of only part of the object instance will generally be quite different from each other and from initial segmentation masks that accurately define the boundaries of the object instance).

Similarly, in examples in which the prompts were defined throughout the imaging and/or audio data 115, if the imaging and/or audio data contains a single, principal object instance (with the remainder of the imaging and/or audio data being considered background), it may be expected that any initial segmentation mask that is similar to the majority of initial segmentation masks defines the boundaries of the object instance with reasonable accuracy (as the initial segmentation masks for any prompts within the background of the imaging and/or audio data will generally define different regions of the background to one another).

In examples in which the prompts were defined throughout the imaging and/or audio data 115 and the imaging and/or audio data contains more than one object instance in the foreground, identifying the subset of initial masks based on the similarity of each initial segmentation mask with each other initial segmentation mask may result in more than one subset of similar initial segmentation masks, each subset corresponding to a different object instance. The processing system 120 may then be configured to process each subset separately to determine a final segmentation mask for each object instance.

In another example, if semantic knowledge of the object instance (e.g. an object class for the object instance) is available, the subset of initial masks may be identified based on a measure of similarity of each initial segmentation mask to an object prior. The processing system 120 may be configured to define an object prior for the object instance. The object prior may relate to any statistical measure of the initial segmentation masks. For instance, where the imaging and/or audio data comprises imaging data, the object prior may comprise an approximation of the position, size and/or shape of the object instance.

The object prior may, for example, be defined using an object detection algorithm to identify the object. The object detection algorithm may identify a region corresponding to the object instance; this region may be used to define the position and size of the object prior. The object detection algorithm may identify an object class for the object; the object class may be used to define a shape of the object prior (e.g. using a predefined template corresponding to the identified object class). Where an object detection algorithm is used to identify a region of interest in which to define the plurality of prompts, the result of this object detection algorithm may be used to define the object prior. Alternatively, the object prior could be determined using information about the semantic content of the imaging data obtained from another source. For instance, if data indicating a location of the image acquisition (e.g. GPS data) is available for the imaging data, the processing system may be configured to obtain the data indicating the location of the image acquisition and define an object prior based on the location of the image acquisition (for instance, if the location of the image acquisition corresponds to a location of a famous landmark, the object prior may be defined for the famous landmark). If the imaging data is video data accompanied by audio, the audio may be processed to define the object prior (for instance, if a person is speaking in the audio at the moment in time of the video frame being segmented, an object prior for a person may be defined).

Having defined an object prior for the object instance, the processing system 120 may be configured to compare each initial segmentation mask to the object prior, and to define the subset of initial segmentation masks (i.e. the subset used to determine the final segmentation mask) based on the comparison of each initial segmentation mask with the object prior.

The comparison of each initial segmentation mask with the object prior may be based on size and/or shape (and, optionally, position, if the prompts were defined throughout the imaging data).

For instance, a size (e.g. an area) of each initial segmentation mask may be compared with a size (e.g. an area) of the object prior, and any initial segmentation mask for which the size falls outside a predetermined margin of the size of the object prior may be excluded from the subset of initial segmentation masks used to determine the final segmentation mask. For example, an initial segmentation mask may be excluded from the subset if the area of the initial segmentation mask is more than twice the area of the object prior or has a value that is less than 10% of the area of the object prior.

Additionally or alternatively, a measure of shape similarity to the object prior may be determined for each initial segmentation mask, and any initial segmentation mask for which the measure of shape similarity fails to exceed a predetermined similarity threshold may be excluded from the subset of initial segmentation masks used to determine the final segmentation mask. The measure of shape similarity to the object prior may be determined for each initial segmentation mask by defining an image moment for each initial segmentation mask and comparing the image moment for each initial segmentation mask with the object prior.

Various techniques are envisaged for processing the initial segmentation masks (or subset of initial segmentation masks) to determine the final segmentation mask for the object instance.

In some examples, the final segmentation mask may be determined as an intersection of the initial segmentation masks. In other words, an element of the imaging and/or audio data may be determined as belonging to the final segmentation mask only if the element is included in all of the initial segmentation masks (or all of the initial segmentation masks in the subset, as appropriate). As used herein, an "element" of imaging and/or audio data may be a pixel of imaging data or a sample of audio data, as appropriate.

In other examples, the final segmentation mask may be determined by processing the initial segmentation masks (or a subset of the initial segmentation masks, as appropriate) to define a frequency distribution for a plurality of elements of the imaging and/or audio data 115. The plurality of elements may, for example, comprise all elements of the imaging and/or audio data (e.g. if the plurality of prompts were defined throughout the imaging and/or audio data), all elements within the region of interest for the object instance (e.g. if the plurality of prompts were defined only within the region of interest), or all elements that are included in at least one of the initial segmentation masks (or at least one of the initial segmentation masks in the subset, as appropriate).

The frequency distribution indicates, for each element of the plurality of elements, how many initial segmentation masks include the element. The frequency distribution may be considered as a histogram (a 2D histogram in the case of imaging data) representing the distribution of the initial segmentation masks.

The frequency distribution may, for example, be defined by summing the initial segmentation masks (or the subset of initial segmentation masks). For instance, the value of the frequency distribution may, for each element, be equal to the number of initial segmentation masks in which the element is included. Thus, in the case of imaging data, the frequency distribution $H(x, y)$ may be determined using Equation 1:

$$H(x, y) = \frac{1}{K} \sum_{j=1}^{K} M_j \qquad (1)$$

where $(x, y)$ is the pixel coordinate and $K$ is the number of initial segmentation masks $M_j$ used to determine the final segmentation mask.

In some examples, the frequency distribution may be defined using a weighted sum of the initial segmentation masks (or of the initial segmentation masks in the subset). For example, each initial segmentation mask may be weighted according to a similarity to an object prior for the object. An initial segmentation mask that has a high similarity to the object prior may have a higher weighting in the weighted sum than an initial segmentation mask with a lower similarity to the object prior. The object prior, and the similarity of each initial segmentation mask to the object prior, may be determined as described above. The weighting of each initial segmentation mask may be performed in addition to or instead of using the similarity of each initial segmentation mask to define a subset of initial segmentation masks.

In some examples, the frequency distribution may be normalized (i.e. after summing the initial segmentation masks). In this way, the value of the frequency distribution for each element of the imaging and/or audio data may be considered as a probability that the element belongs to the object instance.

The final segmentation mask for the object instance may be determined by processing the frequency distribution. For example, a threshold may be used to determine the final segmentation mask, with any element of the imaging and/or audio data 115 for which the value in the frequency distribution exceeds the threshold being classified as belonging to the object instance (and thus being included in the final segmentation mask). In other words, any element that is included in enough initial segmentation masks is included in the final segmentation mask.

In some examples, the value of the threshold may be equal to half of the number of initial segmentation masks used to determine the final segmentation mask (i.e. half of the total number of initial segmentation masks if all initial segmentation masks are processed to determine the final segmentation mask, or half of the number of initial segmentation masks in the subset if only a subset of initial segmentation masks is processed to determine the final segmentation mask). In this way, (if the initial segmentation masks are not weighted differently in the frequency distribution) an element of the imaging and/or audio data 115 will be included in the final segmentation mask if the element is included in the majority of the initial segmentation masks used to determine the final segmentation mask.

The value of the threshold may depend on the application for which the object instance segmentation is being performed. In some applications, it is important that the final segmentation mask does not include any elements that do not belong to the object instance; in these applications, a higher threshold value may be used. In other applications, it is important that all elements belonging to the object instance are included in the final segmentation mask; in these applications, a lower threshold value may be used. In some examples, the value of the threshold may depend on an object category for the object instance (in other words, different threshold values may be applied for different types of object).

In some examples, where the imaging and/or audio data comprises imaging data with more than one color channel (for instance, where the imaging data comprises an RGB image), a different threshold value may be used for each color channel.

In some examples, an enlarging operation may be performed on the frequency distribution, with one or more values provided between the values for adjacent elements of the imaging and/or audio data 115. The one or more values between the values for adjacent elements may be determined by interpolating the adjacent values. The use of an enlarging operation on the frequency distribution may provide a more accurate boundary for the final segmentation mask.

In some cases, the processing system 120 may define a separate final segmentation mask for each of a plurality of components of the object instance. The processing system may be configured to use semantic knowledge of the object instance to detect that the final segmentation masks each segment a respective component of the object instance, and, in response to detecting the final segmentation masks each segment a respective component of the object instance, combine the final segmentation masks (for instance, by adding the final segmentation masks) to form a combined segmentation mask for the object instance. For example, where the imaging data captures a person, separate final segmentation masks may be determined for different parts of the person (e.g. the head, torso and each arm and leg); if it is known that the imaging data captures a person, the final segmentation masks may be combined to form a combined segmentation mask for the person.

Fig. 2 illustrates an example of object instance segmentation. In Fig. 2, the object instance is a pair of glasses on a face. Prompt-based segmentation models often provide poor results when segmenting a pair of glasses; for instance, a prompt on a lens of the glasses in front of an eye may result in a segmentation mask for the eye instead of the glasses.

A facial feature detector has been used to identify a region of interest 210 for the object instance. A plurality of point prompts 220a, 220b, 220c, 220d, 200e, 200f, 200g have been defined within the region of interest, and an initial segmentation mask has been generated for each of the point prompts using a prompt-based segmentation model.

The initial segmentation mask for each point prompt 220a, 220b, 220c, 220d, 200e, 200f, 200g were compared with an object prior. The point prompts 220a and 220g are not within the boundaries of the pair of glasses, so the initial segmentation masks for the point prompts 220a and 220g are dissimilar to the object prior, and are excluded from the subset used to determine the final segmentation mask. The initial segmentation masks for the point prompts 220b, 220c, 220d, 200e and 200f are similar to one another (although they have small differences at the pixel level) and to the object prior, so are included in the subset used to determine the final segmentation mask.

The initial segmentation masks for the point prompts 220b, 220c, 220d, 200e and 200f are summed to define a frequency distribution, and each pixel for which the value of the frequency distribution exceeds a threshold is included in the final segmentation mask 230.

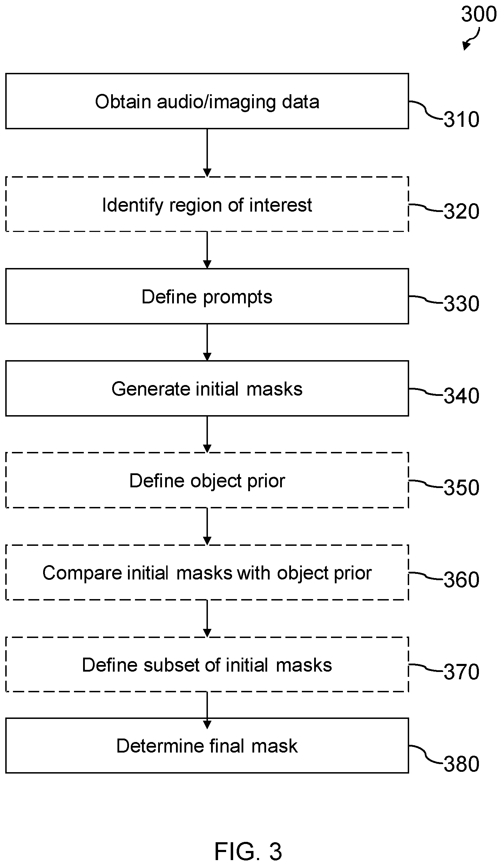

Fig. 3 illustrates a method 300 for object instance segmentation, according to an embodiment of the invention.

The method 300 begins at step 310, at which imaging and/or audio data is obtained. The imaging and/or audio data may comprise an image acquired by an optical camera, medical imaging data, audio data, a video, or a video with accompanying audio.

At step 330, a plurality of prompts for a prompt-based segmentation model are defined for an object instance in the imaging and/or audio data.

In some examples, the method 300 may be configured to perform a step 320 of identifying a region of interest for the object instance, and the plurality of prompts defined in step 330 may be defined within the region of interest.

At step 340, the imaging and/or audio data is processed using a prompt-based segmentation model, for each of the plurality of prompts, to generate an initial segmentation mask for each prompt.

At step 380, at least a subset of the initial segmentation masks is processed to determine a final segmentation mask for the object instance.

In some examples, all of the initial segmentation masks generated in step 340 may be processed to determine the final segmentation mask.

In other examples, only a subset of the initial segmentation masks may be processed to determine the final segmentation mask. For instance, the method 300 may comprise a step 350 of defining an object prior for the object instance, a step 360 of comparing each initial segmentation mask with the object prior, and a step 370 of defining a subset of initial segmentation masks based on the comparison of each initial segmentation mask with the object prior. The step 380 of determining the final segmentation mask may then comprise processing the defined subset of initial segmentation masks to determine the final segmentation mask.

Any method described herein may be computer-implemented, where computer-implemented means that the steps of said methods are performed by one or more computers and where a computer is defined as a device suitable for processing data. A computer may be suitable for processing data according to prescribed instructions.

It will be understood that, as the disclosed methods may be computer-implemented methods, there is also proposed a concept of a computer program product comprising code means for implementing any described method when said program is run on a processing system.

The skilled person would be readily capable of developing a processor for carrying out any herein described method. Thus, each step of a flow chart may represent a different action performed by a processor and may be performed by a respective module of the processing processor.

One or more steps of any of the methods described herein may be performed by one or more processors. A processor comprises an electronic circuit suitable for processing data.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

A single processor or other unit may fulfill the functions of several items recited in the claims.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

**Claims**

1. A method (300) for object instance segmentation, the method comprising:

   obtaining imaging and/or audio data (115);
   defining, for an object instance in the imaging and/or audio data, a plurality of prompts (220a, 220b, 220c, 220d, 220e, 220f, 220g) for a prompt-based segmentation model;
   for each of the plurality of prompts, processing the imaging and/or audio data using a prompt-based segmentation model to generate an initial segmentation mask; and
   processing at least a subset of the initial segmentation masks to determine a final segmentation mask (230) for the object instance.

2. The method (300) of claim 1, wherein the imaging and/or audio data (115) comprises imaging data.

3. The method (300) of claim 1 or 2, wherein:

   the method further comprises:

      defining an object prior for the object instance; and
      for each initial segmentation mask, comparing the initial segmentation mask with the object prior; and

   the step of processing at least a subset of initial segmentation masks to determine the final segmentation mask (230) for the object instance is based on the comparison of each initial segmentation mask with the object prior.

4. The method (300) of claim 3, wherein:

the method further comprises defining a subset of initial segmentation masks based on the comparison of each initial segmentation mask with the object prior; and
only the defined subset of initial segmentation masks is processed to determine the final segmentation mask (230) for the object instance.

5. The method (300) of claim 4, wherein:

the imaging and/or audio data (115) comprises imaging data;
the step of comparing each initial segmentation mask with the object prior comprises comparing a size of each initial segmentation mask with a size of the object prior; and
the step of defining the subset of initial segmentation masks comprises excluding from the subset any initial segmentation mask for which a size of the initial segmentation mask falls outside a predetermined margin of the size of the object prior.

6. The method (300) of claim 4 or 5, wherein:

the imaging and/or audio data (115) comprises imaging data;
the step of comparing each initial segmentation mask with the object prior comprises determining, for each initial segmentation mask, a measure of shape similarity of a shape of the initial segmentation mask to a shape of the object prior; and
the step of defining the subset of initial segmentation masks comprises excluding from the subset any initial segmentation mask for which the measure of shape similarity fails to exceed a predetermined similarity threshold.

7. The method (300) of any of claims 3 to 6, wherein the step of processing at least a subset of initial segmentation masks to determine the final segmentation mask (230) for the object instance comprises weighting each initial segmentation mask according to similarity to the object prior.

8. The method (300) of any of claims 1 to 7, wherein the plurality of prompts (220a, 220b, 220c, 220d, 220e, 220f, 220g) for the object instance is defined by:

identifying a region of interest (210) for an object instance in the imaging and/or audio data (115); and
defining the plurality of prompts within the region of interest.

9. The method (300) of claim 8, wherein:

the imaging and/or audio data comprises imaging data (115); and
the region of interest (210) for the object instance is identified using an object detection algorithm.

10. The method (300) of claim 8 or 9, wherein the plurality of prompts (220a, 220b, 220c, 220d, 220e, 220f, 220g) is defined by statistical sampling of the region of interest (210).

11. The method (300) of any of claims 1 to 10, wherein the final segmentation mask (230) is determined by:

processing at least a subset of the initial segmentation masks to define a frequency distribution for a plurality of elements of the imaging and/or audio data; and
processing the frequency distribution to determine a final segmentation mask for the object instance.

12. The method (300) of claim 11, wherein the frequency distribution is defined by summing at least a subset of the initial segmentation masks.

13. The method (300) of claim 11 or 12, wherein the step of processing the frequency distribution to determine a final segmentation mask (230) for the object instance comprises:

applying a threshold to the frequency distribution; and
classifying any element of the imaging and/or audio data (115) exceeding the threshold as belonging to the object instance.

14. A computer program product comprising computer program code means which, when executed on a computing device having a processing system, cause the processing system to perform all of the steps of the method (300) according to any one of claims 1 to 13.

15. A processing system (120) for object instance segmentation, the processing system being configured to:

obtain imaging and/or audio data (115);
define, for an object instance in the imaging and/or audio data, a plurality of prompts (220a, 220b, 220c, 220d, 220e, 220f, 220g) for a prompt-based segmentation model;
for each of the plurality of prompts, process the imaging and/or audio data using a prompt-based segmentation model to generate an initial segmentation mask; and
process at least a subset of the initial segmentation masks to determine a final segmentation mask (230) for the object instance.

100

110

115

120

FIG. 1

220a

220b

220c

210

230

220d

220e

220f

220g

FIG. 2

300

```
┌─────────────────────────────────────────┐
│        Obtain audio/imaging data         │──310
└─────────────────────────────────────────┘
                    │
                    ▼
┌ ─ ─ ─ ─ ─ ─ ─ ─ ─ ─ ─ ─ ─ ─ ─ ─ ─ ─ ─ ─ ┐
│        Identify region of interest       │──320
└ ─ ─ ─ ─ ─ ─ ─ ─ ─ ─ ─ ─ ─ ─ ─ ─ ─ ─ ─ ─ ┘
                    │
                    ▼
┌─────────────────────────────────────────┐
│              Define prompts              │──330
└─────────────────────────────────────────┘
                    │
                    ▼
┌─────────────────────────────────────────┐
│          Generate initial masks          │──340
└─────────────────────────────────────────┘
                    │
                    ▼
┌ ─ ─ ─ ─ ─ ─ ─ ─ ─ ─ ─ ─ ─ ─ ─ ─ ─ ─ ─ ─ ┐
│            Define object prior           │──350
└ ─ ─ ─ ─ ─ ─ ─ ─ ─ ─ ─ ─ ─ ─ ─ ─ ─ ─ ─ ─ ┘
                    │
                    ▼
┌ ─ ─ ─ ─ ─ ─ ─ ─ ─ ─ ─ ─ ─ ─ ─ ─ ─ ─ ─ ─ ┐
│   Compare initial masks with object prior│──360
└ ─ ─ ─ ─ ─ ─ ─ ─ ─ ─ ─ ─ ─ ─ ─ ─ ─ ─ ─ ─ ┘
                    │
                    ▼
┌ ─ ─ ─ ─ ─ ─ ─ ─ ─ ─ ─ ─ ─ ─ ─ ─ ─ ─ ─ ─ ┐
│        Define subset of initial masks    │──370
└ ─ ─ ─ ─ ─ ─ ─ ─ ─ ─ ─ ─ ─ ─ ─ ─ ─ ─ ─ ─ ┘
                    │
                    ▼
┌─────────────────────────────────────────┐
│           Determine final mask           │──380
└─────────────────────────────────────────┘
```

FIG. 3

Europäisches
Patentamt

European
Patent Office

Office européen
des brevets

# EUROPEAN SEARCH REPORT

**Application Number**

EP 24 22 1393

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/271838 A1 (LIFE SPINE INC [US]) 29 December 2022 (2022-12-29) | 1-3,7-9, 14,15 | INV. G06T7/11 |
| A | * paragraph [0055] - paragraph [0068]; figure 5A * * paragraph [0100] - paragraph [0100] * | 4-6, 10-13 | |
| A | CAI MIAOMIAO ET AL: "BioSAM: Generating SAM Prompts From Superpixel Graph for Biological Instance Segmentation", IEEE JOURNAL OF BIOMEDICAL AND HEALTH INFORMATICS, IEEE, PISCATAWAY, NJ, USA, vol. 29, no. 1, 3 October 2024 (2024-10-03), pages 273-284, XP011992104, ISSN: 2168-2194, DOI: 10.1109/JBHI.2024.3474706 [retrieved on 2024-10-04] * abstract * | 1-15 | |
| A | CAI ZHI ET AL: "Crowd-SAM: SAM as a Smart Annotator for Object Detection in Crowded Scenes", 7 December 2024 (2024-12-07), COMPUTER VISION - ECCV 2024; [LECTURE NOTES IN COMPUTER SCIENCE; LECT.NOTES COMPUTER], SPRINGER NATURE SWITZERLAND, CHAM, PAGE(S) 334 - 351, XP047716753, ISSN: 0302-9743 ISBN: 978-3-031-72889-1 [retrieved on 2024-12-07] * abstract * | 1-15 | **TECHNICAL FIELDS SEARCHED (IPC)** G06T |

-/--

The present search report has been drawn up for all claims

| Place of search | Date of completion of the search | Examiner |
|---|---|---|
| Munich | 5 May 2025 | Üreyen, Soner |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

**EUROPEAN SEARCH REPORT**

**Application Number**

EP 24 22 1393

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHI ZENGLIN ET AL: "Training-free Object Counting with Prompts", 2024 IEEE/CVF WINTER CONFERENCE ON APPLICATIONS OF COMPUTER VISION (WACV), IEEE, 3 January 2024 (2024-01-03), pages 322-330, XP034583103, DOI: 10.1109/WACV57701.2024.00039 [retrieved on 2024-04-09] * abstract; figure 1 * ----- | 1-15 | |

TECHNICAL FIELDS SEARCHED (IPC)

The present search report has been drawn up for all claims

| Place of search | Date of completion of the search | Examiner |
|---|---|---|
| Munich | 5 May 2025 | Üreyen, Soner |

EPO FORM 1503 03.82 (P04C01)

page 2 of 2

**EP 4 765 018 A1**

## ANNEX TO THE EUROPEAN SEARCH REPORT
## ON EUROPEAN PATENT APPLICATION NO.

EP 24 22 1393

05-05-2025

| Patent document cited in search report | Publication date | Patent family member(s) | Publication date |
|---|---|---|---|
| WO 2022271838 A1 | 29-12-2022 | EP 4360057 A1 | 01-05-2024 |
| | | WO 2022271838 A1 | 29-12-2022 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KIRILLOV et al.** Segment Anything. *arXiv:2304.02643*, 2023

- **MA et al.** Segment anything in medical images. *Nat. Commun.*, 2024, vol. 15, 654